# EUROPÄISCHE PATENTSCHRIFT

(11) **EP 4 058 329 B1**
(45) Veröffentlichungstag und Bekanntmachung des Hinweises auf die Patenterteilung: **22.04.2026**
(21) Anmeldenummer: 20801312.8
(22) Anmeldetag: 11.11.2020
(51) Int. Cl.: B60R 16/02

(54) **FAHRZEUGANBAUTEIL MIT INTEGRIERTEN FUNKTIONSELEMENTEN**
VEHICLE ATTACHMENT WITH INTEGRATED FUNCTION ELEMENTS
COMPOSANT DE VÉHICULE POURVU D'ÉLÉMENTS FONCTIONNELS INTÉGRÉS

(30) Priorität: 13.11.2019 EP 19208790
(43) Veröffentlichungstag der Anmeldung: 21.09.2022
(73) Patentinhaber: FREEGLASS GmbH & Co. KG, 71409 Schwaikheim (DE)
(72) Erfinder: MARCEAU, Arthur, 3800 Grenoble (FR); FRIOCOURT, Laurent, 70190 Stuttgart (DE); WEISSENBERGER, Uwe, 97078 Würzburg (DE)
(74) Vertreter: Witte, Weller & Partner Patentanwälte mbB
(86) Internationale Anmeldenummer: PCT/EP2020/081763
(87) Internationale Veröffentlichungsnummer: WO 2021/094373

(56) Entgegenhaltungen:
- EP-A1- 3 473 498
- WO-A1-2009/036552
- DE-A1- 102016 100 064
- DE-A1- 102017 208 368
- US-A1- 2018 170 309
- US-A1- 2019 143 910
- US-A1- 2019 152 433

## Beschreibung

Die Erfindung liegt auf dem technischen Gebiet der Fertigung von Fahrzeugen und betrifft ein Anbauteil für ein Fahrzeug, im Folgenden auch Fahrzeuganbauteil oder kurz Anbauteil genannt, welches mehrere integrierte Funktionselemente umfasst. Die Erfindung erstreckt sich weiterhin auf ein Verfahren zur Herstellung des Fahrzeuganbauteils sowie auf die Verwendung des Fahrzeuganbauteils zur Integration von Funktionselementen in Fahrzeugen.

Es ist bekannt, Geräte wie Mobiltelefone und Computer, insbesondere Tablet-Computer, über berührungsempfindliche Anzeigevorrichtungen (Touchscreens) zu steuern. Eine Steuerung erfolgt durch Tippen mit dem Finger auf bestimmte Auswahlfelder des Touchscreens. Bekannt ist auch die Anwendung von berührenden Wischgesten, d.h. Bewegungen von einem oder mehreren Fingern, mit denen über den Touchscreen gestrichen wird, beispielsweise um zwischen verschiedenen Bedienoberflächen zu wechseln oder Menüs mit Auswahlfeldern aufzumachen. Diese Methode der Interaktion mit Geräten ist für den Anwender meist schnell zu erlernen und praktisch in der Anwendung, so dass sie eine weite Verbreitung gefunden hat.

Die Touch-Technik hat bereits Eingang in die Fahrzeugtechnik gefunden. Eine gängige Anwendung ist die fingerbasierte Steuerung von Navigationsgeräten durch einen Touchscreen. Von am Markt vertriebenen Fahrzeugen ist es ferner bekannt, B-Säulenabdeckungen von Fahrzeugen mit einem kapazitiven Bewegungssensor auszustatten, um durch berührende Eingabe eines voreinstellbaren Codes das Fahrzeug zu öffnen.

Die Touch-Technik ist stets auf einen physischen Kontakt durch den Anwender angewiesen, was jedoch in bestimmten Umgebungen und Situationen ungeeignet sein kann, beispielsweise wenn der Nutzer Handschuhe trägt oder die Oberfläche des Touchscreens verschmutzt ist. Dies gilt insbesondere für die Verwendung von kapazitiven Bewegungssensoren von B-Säulenabdeckungen, bei denen der Nutzer auch bei kalter Witterung seine Handschuhe ausziehen muss, um eine berührende Eingabe durchzuführen. Zudem kann durch eine Schmutzschicht auf der außenliegenden Oberfläche der berührende Finger verschmutzt werden oder sogar eine ordnungsgemäße Eingabe beeinträchtigt werden.

US 2019/0152433 A1 zeigt ein Anbauteil einer B-Säule eines Kraftfahrzeugs nach dem Oberbegriff von Anspruch 1, welche über Sensoren zur Nutzereingabe in Form von Berührungen oder Wischgesten verfügt.

DE 10 2016 100 064 A1 zeigt eine adaptive Anzeige in einer B-Säule eines Kraftfahrzeugs mit einer Erfassungseinrichtung zum Erfassen einer Annäherung sowie von Gesten einer Person und einer Anzeigeeinrichtung mit einer Darstellung von Inhalt in Abhängigkeit der Gesten.

Aus der DE 10 2017 208 368 A1, US 2018/170309 A1, EP3 473 498 A1, WO2009/036552 A1 und der US 2019/143910 A sind vergleichbare Anbau- oder Blendenbauteile bekannt. Demgegenüber besteht die Aufgabe der vorliegenden Erfindung darin, ein verbessertes Fahrzeuganbauteil zur Verfügung zu stellen, mit denen durch die Touch-Technik bedingte Nachteile vermieden werden können.

Diese und weitere Aufgaben werden nach dem Vorschlag der Erfindung durch ein Fahrzeuganbauteil mit integrierten Funktionselementen sowie durch ein Verfahren zur Herstellung des erfindungsgemäßen Fahrzeuganbauteils gemäß den nebengeordneten Patentansprüchen gelöst. Vorteilhafte Ausgestaltungen der Erfindung ergeben sich aus den Unteransprüchen.

Ein Aspekt der Offenbarung bezieht sich auf ein ein Fahrzeuganbauteil mit integrierten Funktionselementen, das eine Abdeckung mit einer Außenseite und einer Innenseite umfasst, wobei die Abdeckung mindestens einen transparenten Bereich aufweist, der aus einem transparenten thermoplastischen Kunststoff besteht. Das Fahrzeuganbauteil umfasst weiterhin ein Trägerteil, das an der Innenseite der Abdeckung angeordnet und mit der Abdeckung stoffschlüssig verbunden. Im Sinne vorliegender Erfindung wird diejenige Oberfläche der Abdeckung, welche in Einbaulage der äußeren Umgebung des Fahrzeugs zugewandt ist, als Außenseite bezeichnet. Diejenige Oberfläche der Abdeckung, welche in Einbaulage dem Innenraum des Fahrzeugs zugewandt ist, wird als Innenseite bezeichnet.

Das Fahrzeuganbauteil weist mehrere Funktionselemente in integrierter Form auf, welche zu diesem Zweck am Trägerteil angebracht sind. Die Funktionselemente sind dazu bestimmt, eine dem jeweiligen Funktionselement zugeordnete bestimmte Funktion auszuführen. Alle Funktionselemente sind so angeordnet und ausgebildet, dass deren Funktion durch die Abdeckung hindurch ausführbar ist.

Die Funktionselemente umfassen mindestens einen kapazitiven Bewegungssensor, der dazu geeignet ist, Gesten eines Anwenders an der Außenseite der Abdeckung berührungslos zu erfassen. Vorzugsweise ist der mindestens eine kapazitive Bewegungssensor dazu geeignet, Gesten eines Anwenders an der Außenseite der Abdeckung ausschließlich berührungslos zu erfassen Der kapazitive Bewegungssensor erfasst Gesten, d.h. Bewegungen der Hand und/oder von einem oder mehreren Fingern, die nahe der Oberfläche (Außenseite) des Fahrzeuganbauteils ausgeführt werden, wobei Richtungen und Geschwindigkeiten der Bewegungen erfasst werden. Die Gesten sind typischer Weise Bewegungen im dreidimensionalen Raum (dreidimensionale Gesten). Wesentlich hierbei ist, dass die Gesten des Anwenders berührungslos erfasst werden können, so dass eine Berührung der Außenseite der Abdeckung nicht erforderlich ist.

Die vom kapazitiven Bewegungssensor berührungslos erfassten Gesten dienen generell zur Steuerung von Fahrzeugfunktionen und/oder zur Darstellung von Fahrzeuginformationen, für welche eine Vielzahl von möglichen Anwendungen denkbar ist. Beispielsweise kann durch eine berührungslose Gestensteuerung das Fahrzeug auf- oder abgeschlossen werden, Fahrzeugfenster können geöffnet oder geschlossen werden oder Lichter des Fahrzeugs können an- oder ausgeschaltet werden. Beispielsweise können auch Zustandsinformationen des Fahrzeugs dargestellt werden, wie Batteriezustand bei Elektroautos oder Ölfüllung bei Verbrennungsmotoren.

Der kapazitive Bewegungssensor zur vorzugsweise ausschließlich berührungslosen Erfassung von Gesten eines Anwenders ist zu diesem Zweck mit einer Steuereinrichtung (Controller) zur Steuerung von Funktionen des Fahrzeugs verbunden, wobei Sensorausgangssignale auf Basis der erfassten Gesten erzeugt und der Steuereinrichtung zugeführt werden. Die Steuereinrichtung nimmt auf Basis der Sensorausgangssignale Steuerungen von Fahrzeugfunktionen vor. Um die vom kapazitiven Bewegungssensor erfassten Gesten zu interpretieren bzw. einen Bedeutungsgehalt zuzuweisen, werden die erfassten Gesten beispielsweise mit in einem Datenspeicher hinterlegten Gesten-Mustern verglichen, bevor eine entsprechende Instruktion zur Verarbeitung an die Steuereinrichtung übergeben wird. In entsprechender Weise können Zustandsinformationen des Fahrzeugs aus einem Datenspeicher ausgelesen werden.

Der kapazitive Bewegungssensor kann kleinste Veränderungen in einem elektrischen Feld detektieren, das durch entsprechende Sensorantennen erzeugt wird. Insbesondere wird das elektrische Feld durch die Anwesenheit eines Fingers oder einer Hand gestört, so dass durch diese Störungen Bewegungsrichtungen und Geschwindigkeiten von Gesten erfasst werden können. Der kapazitive Bewegungssensor ist so ausgebildet und angeordnet, dass das elektrische Feld zum berührungslosen Erfassen von Gesten sich durch die Abdeckung hindurch bis auf die nahe Umgebung der Außenseite der Abdeckung erstreckt. Kapazitive Bewegungssensoren arbeiten auch dann einwandfrei, wenn sie hinter einem elektrisch isolierenden Werkstoff angeordnet sind. Dem Fachmann sind der grundsätzliche Aufbau und die Funktion von kapazitiven Bewegungssensoren wohlbekannt, so dass hier nicht näher darauf eingegangen werden muss.

Die Funktionselemente umfassen weiterhin mindestens eine gegenüberliegend zum transparenten Bereich angeordnete Anzeigevorrichtung zur Darstellung von Informationen basierend auf mindestens einer vom kapazitiven Bewegungssensor berührungslos erfassten Geste. Die Darstellung auf der Anzeigevorrichtung soll auf der Außenseite der Abdeckung erkennbar sein. Die Anzeigevorrichtung ist so ausgebildet und angeordnet, dass eine Darstellung auf der Anzeigevorrichtung durch den transparenten Bereich der Abdeckung hindurch erkennbar ist. Die Anzeigevorrichtung ist zu diesem Zweck in einer Aussparung (Durchbrechung) oder zumindest einer lokalen Ausdünnung des Trägerteils angeordnet, so dass die Anzeigevorrichtung durch den transparenten Bereich der Abdeckung hindurch erkennbar ist. Vorzugsweise sind der mindestens eine kapazitive Bewegungssensor und die Anzeigevorrichtung räumlich getrennt voneinander angeordnet, wobei der mindestens eine kapazitive Bewegungssensor und die Anzeigevorrichtung insbesondere entlang einer Erstreckungsrichtung des Fahrzeuganbauteils (z.B. entlang einer B-Säule eines Kraftfahrzeugs) räumlich versetzt zueinander angeordnet sind.

Die Anzeigevorrichtung ist beispielsweise in Form eines Liquid Crystal Displays oder eines OLED-Displays ausgebildet. Denkbar ist auch, die Anzeigevorrichtung in Form eines durch eine LED hinterleuchteten Elements, beispielsweise eine mit Symbolen siebbedruckte Polymerfolie, auszubilden.

Die Anzeigevorrichtung zeigt Informationen an und liefert dem Anwender vorzugsweise eine Rückmeldung über die erfolgreiche Erfassung einer Geste. Dies ist besonders wichtig, da eine haptische Rückmeldung nicht vorliegt. So können insbesondere Fehler durch mehrfache Wiederholung von Gesten vermieden werden, was auftreten kann, wenn sich ein Anwender nicht sicher ist, ob seine Eingabe entgegengenommen wurde. Neben der Rückmeldung über die erfolgreiche Eingabe von Gesten kann die Anzeigevorrichtung dazu dienen, für die Steuerung von Fahrzeugfunktionen eine oder mehrere Benutzeroberflächen anzuzeigen, welche vorzugsweise zur jeweilig erfassten Geste kontextbezogen sind und zur Steuerung von Fahrzeugfunktionen sowie zur Darstellung von Fahrzeuginformationen dienen können.

Die Erfindung macht sich somit die Vorteile einer berührungslosen Gestenerfassung bei Fahrzeuganbauteilen zu eigen, wobei durch die Anzeigevorrichtung vorteilhaft eine Rückmeldung über die erfolgreiche Erfassung erfolgt. Die eingangs genannten Nachteile herkömmlicher berührungsempfindlicher Touchscreens können vermieden werden, wobei es für den Anwender insbesondere nicht erforderlich ist einen Handschuh auszuziehen, um eine Eingabe vorzunehmen.

Gemäß der Ausgestaltung des erfindungsgemäßen Fahrzeuganbauteils umfasst dieses als weiteres Funktionselement eine gegenüberliegend zum transparenten Bereich angeordnete Kamera, die - wie alle Funktionselemente - am Trägerteil befestigt ist. Die Kamera ist zur Bildaufnahme durch den transparenten Bereich hindurch vorgesehen und geeignet ausgebildet. Der Strahlengang erstreckt sich von der Außenseite der Abdeckung her durch den transparenten Bereich der Abdeckung hindurch zu der innenseitig angeordneten Kamera. Die Kamera erweitert die technischen Möglichkeiten des Anbauteils in vielfältiger Weise. Besonders vorteilhaft ist die Bildaufnahme beispielsweise zum Zwecke der Personenerkennung, insbesondere durch Gesichtserkennung, vorzugsweise um einen vorbestimmbaren Anwender zur Dateneingabe zu legitimieren. Denkbar wäre beispielsweise auch die Erfassung (Scan) eines QR-Codes, in dem zu übergebende Daten in kodierter Form enthalten sind. Der QR-Code könnte beispielsweise auf dem Display eines Mobiltelefons dargestellt werden, so dass in praktischer Weise eine einfache und schnelle Kommunikation zwischen Mobiltelefon und Anbauteil möglich ist. Das Mobiltelefon könnte zu diesem Zweck mit einer speziellen Applikation versehen sein, welche für die Steuerung von Fahrzeugfunktionen und Darstellung von fahrzeugbezogenen Informationen geeignet ausgebildet ist. Der Anwender könnte die gewünschte Aktion im Mobiltelefon auswählen und über den QR-Code an das Anbauteil übertragen. Über eine von dem kapazitiven Bewegungssensor berührungslos erfasste Geste des Anwenders könnte das Auslesen des QR-Codes initiiert werden. Dies ist nur ein Beispiel einer Vielzahl von Anwendungsfällen, welche durch die Nutzung einer Kamera in vorteilhafter Weise ermöglicht sind.

Die Kameralinse der Kamera kann jeden geeigneten Durchmesser haben. Der Durchmesser der Kameralinse liegt bevorzugt zwischen 1 mm und 100 mm, besonders bevorzugt zwischen 1 mm und 50 mm, ganz besonders bevorzugt zwischen 5 mm und 30 mm, beispielsweise 11 mm.

Die Kamera ist bevorzugt zum Erfassen von sichtbarem Licht der Wellenlängen von 380 nm bis 780 nm und/oder infrarotem Licht der Wellenlängen von 780 nm bis 1300 nm geeignet ausgebildet. In einer besonders bevorzugten Ausführungsform entspricht der von der Kamera erfasste Wellenlängenbereich im Wesentlichen dem für das menschliche Auge sichtbaren Wellenlängenbereich, d.h. 380 nm bis 780 nm.

Gemäß der Ausgestaltung des erfindungsgemäßen Fahrzeuganbauteils umfasst dieses als weiteres Funktionselement mindestens einen weiteren am Trägerteil befestigten, kapazitiven Bewegungssensor für die berührende Erfassung von Tippeingaben und/oder (zweidimensionalen) Wischgesten an der Außenseite der Abdeckung. Der kapazitive Bewegungssensor ist so ausgebildet und angeordnet, dass das elektrische Feld zum berührenden Erfassen von Tippeingaben und/oder Wischgesten sich durch die Abdeckung hindurch bis auf die nahe Umgebung der Außenseite der Abdeckung erstreckt. Vorzugsweise ist der kapazitive Bewegungssensor so ausgebildet, dass ausschließlich Tippeingaben erfassbar sind. Auch durch dieses weitere Funktionselement werden die technischen Möglichkeiten des Anbauteils erweitert, da auch berührende Eingaben bei geeigneten Umständen vorteilhaft sein können. Beispielsweise wird auf Basis einer berührungslosen Geste auf der Anzeigevorrichtung eine gestenspezifische Bedienoberfläche mit Auswahlfeldern bereitgestellt, wobei die Auswahlfelder durch eine berührende Eingabe (z.B. Tippeingabe mit dem Finger oder eine Wischgeste) ausgewählt werden können. Denkbar wäre beispielsweise auch, durch eine berührende Wischgeste ein Auswahlmenü mit weiteren Auswahlfeldern zu öffnen, welche dann durch eine berührende Tippeingabe ausgewählt werden können.

Gemäß der Ausgestaltung des erfindungsgemäßen Fahrzeuganbauteils ist das Trägerteil mit mindestens einer Aussparung (d.h. Durchbrechung) oder zumindest einer lokalen Ausdünnung versehen, wobei ein oder mehrere Funktionselemente in der mindestens einen Ausnehmung oder lokalen Ausdünnung des Trägerteils zumindest teilweise aufgenommen sind. Dies gilt auch für mit den jeweiligen Funktionselementen verbundenen, elektrischen Anschlussleitern. Hierdurch kann einerseits der Platzbedarf für die Funktionselemente reduziert werden. Zum anderen kann die Funktion nicht kapazitiv erfassender Funktionselemente, welche durch den transparenten Bereich der Abdeckung hindurch erkennbar sein sollen oder ein Bild aufnehmen (Anzeigevorrichtung, Kamera) verbessert werden. Dies gilt insbesondere dann, wenn das Trägerteil opak ist. Insbesondere kann für jedes Funktionselement eine separate Aussparung oder lokale Ausdünnung vorgesehen sein.

Unter dem Begriff "Ausdünnung" ist hier und im Folgenden eine Abnahme der Wandstärke des thermoplastischen Kunststoffs oder Trägerteils zu verstehen. Dabei ist diese Ausdünnung nur auf jener Seite des Trägerteils ausgebildet, welche von der Innenseite der Abdeckung abgewandt ist. Das heißt, die Ausdünnung ist nicht an einer der Innenseite der Abdeckung zugewandten Außenfläche des Trägerteils ausgebildet, sondern nur an einer von der Abdeckung abgewandten Innenfläche des Trägerteils. Die mindestens eine Aussparung und/oder lokale Ausdünnung kann grundsätzlich jede für die Aufnahme eines Funktionselements geeignete Form haben, beispielsweise die Form eines Quaders oder einer Kreisscheibe.

Die Funktionselemente sind am Trägerteil fest angebracht. Grundsätzlich kann eine feste Verbindung zwischen Funktionselementen und Trägerteil in beliebiger Weise erfolgen, solange eine dauerhaft stabile Anbringung gewährleistet ist. Vorteilhaft ist eine lösbare Befestigung am Trägerteil, so dass Funktionselemente zu Wartungszwecken entfernt oder bei Ausfall ausgetauscht werden können, wobei das Anbauteil ansonsten weiterverwendbar ist. Beispielsweise werden die Funktionselemente mit dem Trägerteil durch eine Klebung stoffschlüssig verbunden. Vorteilhaft ist das Trägerteil mit einem oder mehreren Befestigungselementen zur vorteilhaft lösbaren Befestigung mindestens eines Funktionselements versehen. Beispielsweise ist das Befestigungselement in Form eines Clips oder einer Klemme ausgebildet.

Gemäß einer vorteilhaften Ausgestaltung des erfindungsgemäßen Fahrzeuganbauteils ist das zumindest eine Funktionselement (ausschließlich) an einer von der Abdeckung abgewandten Innenfläche des Trägerteils befestigt, d.h. das zumindest eine Funktionselement ist direkt an einer von der Abdeckung abgewandten Innenfläche des Trägerteils befestigt.

Gemäß der Ausgestaltung des erfindungsgemäßen Fahrzeuganbauteils ist das zumindest eine Funktionselement mittels einer Leiterplatte an einer von der Abdeckung abgewandten Innenfläche des Trägerteils befestigt.

Gemäß der Ausgestaltung des erfindungsgemäßen Fahrzeuganbauteils ist das Trägerteil an einer von der Abdeckung abgewandten Innenfläche mit mindestens einem Kragen zur Befestigung des zumindest einen Funktionselements versehen. Insbesondere kann für jedes Funktionselement ein separater Kragen vorgesehen sein.

Gemäß der Ausgestaltung des erfindungsgemäßen Fahrzeuganbauteils besteht die Abdeckung aus einem thermoplastischen Kunststoff, wobei der transparente Bereich der Abdeckung aus einem transparenten thermoplastischen Kunststoff besteht. Die Abdeckung kann neben dem transparenten thermoplastischen Kunststoff beispielsweise eine Folie, einen intransparenten Kunststoff und/oder Metallteile enthalten. Vorteilhaft besteht die Abdeckung vollständig aus einem transparenten thermoplastischen Kunststoff, so dass die Abdeckung komplett transparent ist und keinen nicht-transparenten Bereich aufweist. Erfindungsgemäß besteht auch das Trägerteil aus einem thermoplastischen Kunststoff und besteht insbesondere aus einem opaken thermoplastischen Kunststoff. Das Fahrzeuganbauteil ist als 2-Komponenten-Spritzgussteil ausgebildet.

Die Ausführungsform, in der das Trägerteil aus thermoplastischen Kunststoff als Spritzgussteil gefertigt ist, bietet den Vorteil einer vereinfachten Montage der Funktionselemente, da sich in diesem Fall eine oder mehrere Aussparungen oder lokale Ausdünnungen für die Funktionselemente sowie Befestigungselemente wie Dome, Clips-Öffnungen o.ä. direkt in das als Spritzgussteil ausgebildete Trägerteil einbringen lassen. Bevorzugt weisen die Funktionselemente ein gegenstückiges Aufnahmekonzept auf, so dass die Funktionselemente beispielsweise lediglich auf das Trägerteil geclipst werden können und ein Kleben nicht notwendig ist. Bei einer aus Mineralglas gefertigten Abdeckung müssen hingegen Innenschale und Befestigungselemente oftmals zusätzlich geklebt werden.

Der transparente thermoplastische Kunststoff der Abdeckung ist bevorzugt 1 mm bis 5 mm dick, besonders bevorzugt 2 mm bis 3 mm dick. Beim erfindungsgemäßen Fahrzeuganbauteil stellt der transparente thermoplastische Kunststoff der Abdeckung insbesondere die für den Betrachter sichtbare Außenhaut des Anbauteils dar. Ein Vorteil des Anbauteils ist, dass das Gewicht der Abdeckung gegenüber einer Abdeckung, die aus Mineralglas gefertigt ist, deutlich verringert ist, wenn die Abdeckung zumindest teilweise, insbesondere vollständig aus einem transparenten thermoplastischen Kunststoff gefertigt ist.

Der transparente thermoplastische Kunststoff der Abdeckung enthält bevorzugt zumindest Polyethylen (PE), Polycarbonate (PC), Polypropylen (PP), Polystyrol, Polybutadien, Polynitrile, Polyester, insbesondere Polyethylenterephthalat (PET), Polyurethane (PU), Polymethylmethacylate (PMMA), Polyacrylate, Polyamide (PA), Acrylnitril-Butadien-StyrolCopolymerisate (ABS), Styrol-Acrylnitril-Copolymerisate (SAN), Acrylester-Styrol-Acrylnitril Copolymerisate (ASA), Acrylnitril-Butadien-Styrol-Polycarbonat-Gemische (ABS/PC) und/oder ihre Copolymerisate, Cokondensate und/oder Gemische. Besonders bevorzugt enthält der transparente thermoplastische Kunststoff der Abdeckung Polycarbonate (PC), Polymethylmethacrylat (PMMA), Styrol-Acrylnitril (SAN), und/oder Copolymere oder Gemische davon. Diese Polymere erlauben eine Verarbeitung zu hochglänzenden, je nach Anwendungszweck teilweise glasähnlichen Oberflächen. Vorteilhaft besteht der mindestens eine transparente Bereich der Abdeckung, insbesondere die komplette Abdeckung, aus einem oder mehreren der vorstehend genannten Materialien.

In den transparenten thermoplastischen Kunststoff der Abdeckung können an der Innenseite Oberflächenstrukturen eingebracht sein, die die optischen Eigenschaften der Kamera bzw. den Lichteinfall auf selbige optimieren können, wie z.B. Krümmungen, Prismen oder Fresneloptiken. Dies stellt neben einer Gewichtsreduzierung einen weiteren Vorteil gegenüber der Verwendung von Mineralglas dar, da in Mineralglas die Einbringung von solchen Oberflächenstrukturen nicht möglich ist.

In einer bevorzugten Ausführungsform ist das Trägerteil aus thermoplastischem Kunststoff gefertigt. Es enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyester, Polyaminde, Polyethylentherephthalat (PET), bevorzugt AcylnitrilButadien-Styrol (ABS), Acrylester-Styrol-Acrylnitril (ASA), Acrylnitril-Butadien-StyrolPolycarbonat (ABS/PC) und/oder Copolymere oder Gemische davon oder besteht daraus. Bevorzugt enthält das aus thermoplastischem Kunststoff gefertigte Trägerteil anorganische oder organische Füllstoffe, besonders bevorzugt SiO₂, Al₂O₃, TiO₂, Tonmineralien, Silikate, Zeolithe, Glasfasern, Kohlenstofffasern, Glaskugeln, organische Fasern und/oder Gemische davon. Diese Füllstoffe können die Stabilität des Trägerteils erhöhen. Zudem können die Füllstoffe den Anteil an polymeren Materialien verringern und so die Herstellungskosten des Bauteils vermindern. Vorteilhaft besteht das Trägerteil aus einem oder mehreren der vorstehend genannten Materialien.

Der thermoplastische Kunststoff des Trägerteils ist bevorzugt opak, besonders bevorzugt farbig, insbesondere von einer dunklen Farbe, ganz besonders bevorzugt schwarz. In einer alternativen Ausführungsform ist der thermoplastische Kunststoff, aus dem das Trägerteil besteht, transparent.

Das aus thermoplastischem Kunststoff gefertigte Trägerteil ist bevorzugt 1 mm bis 100 mm dick, besonders bevorzugt 2 mm bis 50 mm, ganz besonders bevorzugt 2 mm bis 10 mm, insbesondere 2 mm bis 3 mm dick. Im Bereich einer lokalen Ausdünnung ist der thermoplastische Kunststoff des Trägerteils beispielsweise maximal auf 1 mm ausgedünnt.

Gemäß einer weiteren vorteilhaften Ausgestaltung des erfindungsgemäßen Fahrzeuganbauteils ist das Anbauteil, insbesondere die Abdeckung, zumindest an deren Außenseite, und/oder das Trägerteil mit einer Schutzbeschichtung (Hardcoat) beschichtet. Bevorzugt erfolgt eine Beschichtung mit thermisch oder UV-härtenden Lacken, besonders bevorzugt Polysiloxanen, Polyacrylaten, Polymethacrylaten, Polyurethanen und/oder Gemischen oder Copolymeren davon versehen. Der Hardcoat verbessert die Beständigkeit gegenüber mechanischen Beschädigungen, Witterungseinflüssen, Temperaturschwankungen, UV-Strahlung und/oder aggressiven Chemikalien aus der Luft oder dem Spritzwasser. Optional kann der Hardcoat auch dekorative Funktionen wahrnehmen. Die Schutzbeschichtung weist bevorzugt eine Dicke von 1 µm (Mikrometer) bis 50 µm, besonders bevorzugt von 2 µm bis 25 µm auf.

Das erfindungsgemäße Fahrzeuganbauteil kann grundsätzlich eine beliebige, die Fahrzeugau-ßenhaut mitbildende oder eine fahrzeugaußenseitig angebrachte Komponente des Fahrzeugs sein, wobei erfindungsgemäß bevorzugt ist, wenn das Fahrzeuganbauteil eine Frontscheibe, eine Heckscheibe, eine Seitenscheibe, eine Dachscheibe, eine Leiste, ein Stoßfänger, ein Schweller, ein Spoiler, eine Lampenabdeckung oder eine Blende ist. Besonders bevorzugt ist das Fahrzeuganbauteil eine B-Säulenblende.

Die Außenseite der Abdeckung hat die Form einer planen Fläche oder einer gekrümmten Fläche. Die Außenseite der Abdeckung stellt in Einbaulage die für einen Betrachter sichtbare Außenhaut dar. Es handelt sich somit bei dem erfindungsgemäßen Anbauteil nicht um ein zusätzliches Bauteil zur Anbringung an die Innenseite einer Fahrzeugscheibe wie es bei dem in der DE 10 2004 024 735 A1 beschriebenen Bauteil der Fall ist.

Das Merkmal "transparent" bezieht sich im Rahmen der Erfindung auf die Transparenz im sichtbaren Bereich und vorteilhat auch im Infrarotbereich, wobei Transmission für Wellenlängen von 200 nm bis 2000 nm, insbesondere bei Wellenlängen im Bereich des sichtbaren Lichts, bevorzugt mehr als 60%, besonders bevorzugt mehr als 70% und insbesondere mehr als 90% beträgt.

Die Erfindung erstreckt sich weiterhin auf ein Verfahren zur Herstellung eines erfindungsgemäßen Fahrzeuganbauteils mit integrierten Funktionselementen.

In einem ersten Schritt wird eine Abdeckung, die zumindest einen transparenten Bereich aufweist, mittels eines Spritzgussverfahrens hergestellt und in einem zweiten Schritt wird an die Abdeckung an der Innenseite ein Trägerteil aus thermoplastischem Kunststoff derartig angespritzt, dass die Innenseite der Abdeckung mit dem Trägerteil stoffschlüssig verbunden wird.

Alternativ wird in einem ersten Schritt ein aus einem thermoplastischen Kunststoff bestehendes Trägerteil mittels eines Spritzgussverfahrens hergestellt und in einem zweiten Schritt wird an das Trägerteil eine Abdeckung, die zumindest einen transparenten Bereich aufweist, derartig angespritzt, dass die Innenseite der Abdeckung mit dem Trägerteil stoffschlüssig verbunden wird.

In einem dritten Schritt werden die integrierten Funktionselemente am Trägerteil befestigt.

Gemäß einer vorteilhaften Ausgestaltung des erfindungsgemäßen Verfahrens wird das Trägerteil mit mindestens einer in Form einer Durchbrechung ausgebildeten Aussparung oder lokalen Ausdünnung versehen, wobei mindestens ein Funktionselement in der Aussparung oder der lokalen Ausdünnung dem transparenten Bereich der Abdeckung unmittelbar gegenüberliegend angeordnet wird.

Gemäß einer weiteren vorteilhaften Ausgestaltung des erfindungsgemäßen Verfahrens werden die Abdeckung und das daran angebundene Trägerteil im 2-Komponenten-Spritzgussverfahren gefertigt. Dieses Verfahren ermöglicht die nahezu abfallfreie Herstellung, weil ein nachträgliches Beschneiden des Werkstücks nicht notwendig ist. Ebenso können komplexe Strukturen direkt hergestellt werden. Dabei kann entweder zuerst die Abdeckung als Spritzgussteil gefertigt und dann das Trägerteil an dieses gespritzt werden oder es kann alternativ zuerst das Trägerteil gefertigt und dann die Abdeckung an dieses gespritzt werden.

Gemäß einer weiteren vorteilhaften Ausgestaltung des erfindungsgemäßen Verfahrens wird eine Schutzbeschichtung (Hardcoat) auf die Abdeckung, zumindest auf eine Außenseite der Abdeckung, und/oder auf das Trägerteil aufgebracht. Dieser Verfahrensschritt erfolgt typischer Weise zwischen dem zweiten Verfahrensschritt und dem dritten Verfahrensschritt, da nach Anbringen der Funktionselemente das Aufbringen einer Schutzbeschichtung zu Beschädigungen an den Funktionselementen führen kann (hohe Prozesstemperaturen beim Einbrennen eines Lacks). Bei dieser Variante wäre das Aufbringen der Schutzbeschichtung somit ein dritter Schritt, gefolgt von dem Befestigen der integrierten Funktionselemente am Trägerteil in einem vierten Schritt.

Die Erfindung erstreckt sich ferner auf die Verwendung des erfindungsgemäßen Fahrzeuganbauteil zur Integration von Funktionselementen in Fahrzeugen, insbesondere Kraftfahrzeugen wie Personenkraftfahrzeugen, Lastkraftfahrzeugen, Bussen, insbesondere zur Integration in einer Scheibe, insbesondere einer Frontscheibe, einer Heckscheibe, einer Seitenscheibe oder einer Dachscheibe, in einer Leiste, insbesondere einer Seitenleiste, einer Frontleiste, einer Rückleiste oder einer Zierleiste, in einem Stoßfänger, in einem Schweller, in einem Spoiler, in einer Lampenabdeckung oder in einer Blende, insbesondere einer Säulenblende, insbesondere einer B-Säulenblende.

Die Erfindung wird nachfolgend anhand eines Ausführungsbeispiels näher erläutert, wobei Bezug auf die beigefügten Figuren genommen wird. Gleiche und gleichwirkende Elemente sind mit den gleichen Bezugszeichen bezeichnet. Es zeigen in vereinfachter, nicht maßstabsgetreuer Darstellung:
- Fig. 1: eine Aufsicht auf ein erfindungsgemäßes Anbauteil mit integrierten Funktionselementen;
- Fig. 2: einen Querschnitt durch das Anbauteil von Fig. 1 im Bereich des Bewegungssensors;
- Fig. 3: einen Querschnitt durch das Anbauteil von Fig. 1 im Bereich der Anzeigevorrichtung;
- Fig. 4: einen Querschnitt durch das Anbauteil von Fig. 1 im Bereich der Kamera;
- Fig. 5: eine Aufsicht auf ein teilweise dargestelltes Fahrzeug mit dem Anbauteil von Fig. 1;
- Fig. 6: ein Fließschema eines Verfahrens zur Herstellung eines erfindungsgemäßen Anbauteils.

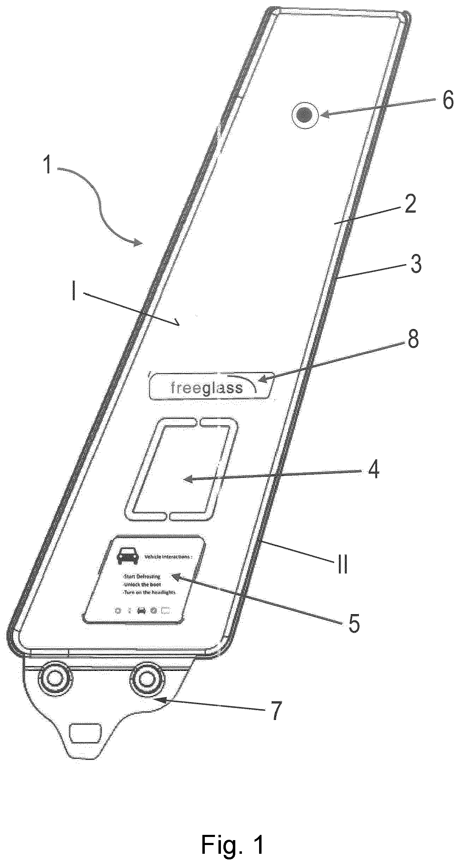

Es sei zunächst Figur 1 betrachtet, worin ein insgesamt mit der Bezugszahl 1 bezeichnetes erfindungsgemäßes Anbauteil mit integrierten Funktionselementen in einer Aufsicht auf die Außenseite I gezeigt ist. Das Anbauteil 1 ist hier beispielsweise in Form einer B-Säulenabdeckung ausgebildet.

Das Fahrzeuganbauteil 1 umfasst eine Abdeckung 2 aus einem transparenten thermoplastischen Kunststoff, sowie ein damit fest verbundenes Trägerteil 3 aus einem opaken (z.B. schwarzen) thermoplastischen Kunststoff. Die Abdeckung 2 weist eine Außenseite (Außenhaut des Fahrzeugs) I sowie eine in Figur 1 nicht erkennbare Innenseite II auf, wobei im verbauten Zustand die Außenseite I der äußeren Umgebung des Fahrzeugs und die Innenseite II dem Fahrzeuginnenraum zugewandt ist. Die Außenseite I ist im Wesentlichen eben, kann jedoch auch gekrümmt sein. Die Abdeckung 2 und das daran angebundene Trägerteil 3 des in Figur 1 dargestellten Anbauteils 1 sind beispielsweise als 2-Komponenten Spritzgussteil gefertigt. Eine Montage des Anbauteils 1 am Fahrzeug kann durch einen Montageabschnitt 7 der Abdeckung 2 erfolgen, worauf hier nicht näher eingegangen wird, da dies für das Verständnis der Erfindung ohne Belang ist.

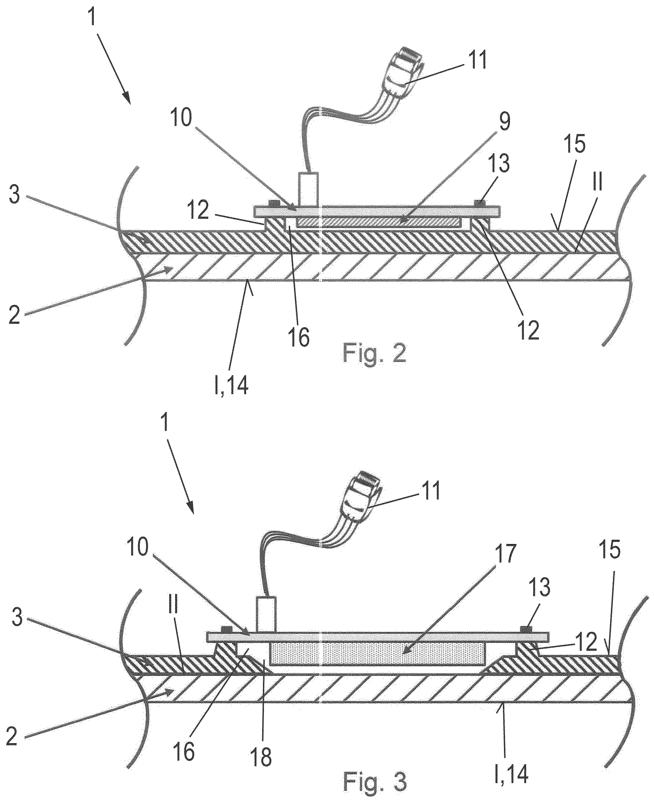

Wie in Figur 1 gezeigt, weist die Außenseite I der Abdeckung 2 mehrere Zonen auf, denen abhängig von dem darunter befindlichen Funktionselement, die in den Querschnittansichten der Figuren 2 bis 4 gezeigt sind, verschiedene Funktionen zugeordnet sind. So verfügt die Außenseite I der Abdeckung 2 über eine Sensorzone 4, in deren nahen Umgebung Gesten eines Anwenders berührungslos erfasst werden können. Die Außenseite I der Abdeckung 2 weist weiterhin eine Anzeigezone 5 zur Darstellung von Informationen sowie eine Kamerazone 6 zur Bildaufnahme auf. In einer Logozone 8 wird ein wahlfrei wählbares Logo (z.B. "freeglas") angezeigt.

Es wird nun ergänzend Bezug auf die Figuren 2 bis 4 genommen, worin verschiedene Querschnittansichten der Anbauteils 1 von Figur 1 gezeigt sind.

Figur 2 zeigt eine Querschnittansicht im Bereich der Sensorzone 4. In der Schnittansicht von Figur 2 sind die Abdeckung 2 mit Außenseite I und Innenseite II sowie das Trägerteil 3 gut erkennbar. Die Außenfläche 14 der Abdeckung 2 ist gleichzeitig die Außenfläche des Anbauteils 1, die Innenfläche 15 des Trägerteils 3 ist gleichzeitig die Innenfläche des Anbauteils 1.

Auf der Innenfläche 15 des Trägerteils 3, d.h. auf der der Innenseite II der Abdeckung 2 abgewandten Seite des Trägerteils 3, ist ein kapazitiver Bewegungssensor 9 angeordnet. Der Bewegungssensor 9 ist mit einer gedruckten Leiterplatte 10 funktionell und strukturell verbunden. Von der Leiterplatte 10 geht ein Anschlusskabel 11 ab, über das der Bewegungssensor 9 mit einer Bordelektronik des Fahrzeugs elektrisch verbindbar ist. Über das Anschlusskabel 11 können Ausgangssignale des Bewegungssensors 9 an die Bordelektronik, insbesondere eine Steuereinrichtung (Controller) für die Steuerung für Fahrzeugfunktionen und zum Auslesen von Fahrzeuginformationen übertragen werden. Wie in Figur 2 gezeigt, ist der Bewegungssensor 9 am Trägerteil 3 fest angebracht, wobei die mit dem Bewegungssensor 9 verbundene Leiterplatte 10 mit einem von der Innenfläche 15 des Trägerteils 2 vorspringenden Kragen 12 durch ein Befestigungsmittel 13 fest verbunden ist. Das Befestigungsmittel 13 ist hier beispielsweise eine Schraube, die in ein passendes Gewinde des Kragens 12 eingeschraubt ist, was in Figur 2 nicht näher dargestellt ist. Es versteht sich, dass auch andere geeignete Befestigungsmittel eingesetzt werden können. Durch den Kragen 12 wird eine Ausnehmung 16 geformt, in welcher der Bewegungssensor 9 aufgenommen ist. Die Ausnehmung 16 ist in Aufsicht beispielsweise quadratisch, rechteckförmig oder rund, was in der Querschnittdarstellung von Figur 2 nicht erkennbar ist. Die Form der Ausnehmung 16 ist vorteilhaft an die Form des Bewegungssensors 9 angepasst.

Eine Aussparung des Trägerteils 3 im Bereich des Bewegungssensors 9 ist nicht erforderlich, da die Materialien von Trägerteil 3 und Abdeckung 2 elektrisch isolierend sind, so dass das vom Bewegungssensor 9 erzeugte elektrische Feld sowohl Trägerteil 3 als auch Abdeckung 2 passieren kann. Der Bewegungssensor 9 ist so ausgebildet und angeordnet, dass sein elektrisches Feld im Nahbereich der Außenseite I, d.h. in der näheren Umgebung der Außenfläche 14, der Abdeckung 2 vorliegt, so dass Gesten im Nahbereich der Außenfläche 14, konkret im Bereich der Sensorzone 4 berührungslos erfasst werden können.

Figur 3 zeigt eine Querschnittansicht im Bereich der Anzeigezone 5. Um unnötige Wiederholungen zu vermeiden, werden nur die Unterschiede zur Querschnittansicht von Figur 2 erläutert und ansonsten wird auf die Ausführungen zu Figur 2 verwiesen.

Auf der Innenfläche 15 des Trägerteils 3 ist eine Anzeigevorrichtung 17 angeordnet. Die Anzeigevorrichtung 17 ist mit einer gedruckten Leiterplatte 10 funktionell und strukturell verbunden. Von der Leiterplatte 10 geht ein Anschlusskabel 11 ab, über das die Anzeigevorrichtung 17 mit der Bordelektronik des Fahrzeugs, insbesondere mit einer Steuereinrichtung (Controller) für die Steuerung von Fahrzeugfunktionen und zum Auslesen von Fahrzeuginformationen, elektrisch verbindbar ist. Über das Anschlusskabel 11 können Eingangssignale zur Anzeigevorrichtung 17 übertragen werden, um Informationen anzuzeigen. Wie in Figur 3 gezeigt, ist die Anzeigevorrichtung 17 am Trägerteil 3 fest angebracht, wobei die mit der Anzeigevorrichtung 17 fest verbundene Leiterplatte 10 mit einem von der Innenfläche 15 des Trägerteils 2 vorspringenden Kragen 12 durch ein Befestigungsmittel 13 fest verbunden ist. Das Befestigungsmittel 13 ist hier beispielsweise eine Schraube, die in ein passendes Gewinde des Kragens 12 eingeschraubt ist, was in Figur 2 nicht näher dargestellt ist. Durch den Kragen 12 wird eine Ausnehmung 16 geformt. Zudem ist das Trägerteil 3 mit einer Aussparung (Durchbrechung) 18 versehen. Die Ausnehmung 16 und die Aussparung 18 formen gemeinsam einen Raum für die Aufnahme der Anzeigevorrichtung 17. Die Ränder der Aussparung 18 sind hier beispielsweise abgeschrägt. Aufgrund der Aussparung 18 des Trägerteils 3 ist ermöglicht, dass die Anzeigevorrichtung 17 von der Außenseite I her durch die transparente Abdeckung 2 hindurch gut erkennbar ist.

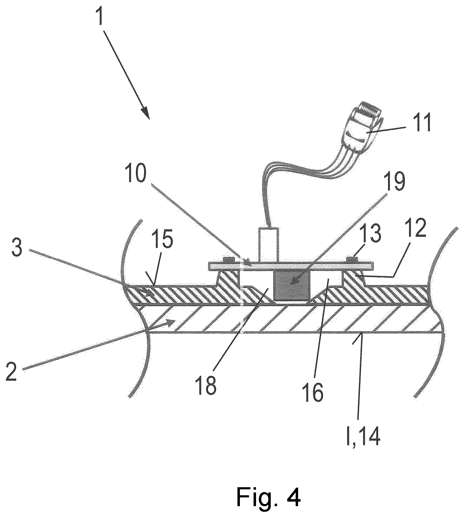

Figur 4 zeigt eine Querschnittansicht im Bereich der Kamerazone 6. Um unnötige Wiederholungen zu vermeiden, werden nur die Unterschiede zur Querschnittansicht von Figur 3 erläutert und ansonsten wird auf die Ausführungen zu Figur 3 verwiesen.

Auf der Innenfläche 15 des Trägerteils 3 ist eine Kamera 19 angeordnet. Die Kamera 19 ist mit einer gedruckten Leiterplatte 10 funktionell und strukturell verbunden. Von der Leiterplatte 10 geht ein Anschlusskabel 11 ab, über das die Kamera 19 mit der Bordelektronik des Fahrzeugs, insbesondere mit einer Steuereinrichtung (Controller) für die Steuerung von Fahrzeugfunktionen und zum Auslesen von Fahrzeuginformationen, elektrisch verbindbar ist. Über das Anschlusskabel 11 können Ausgangssignale der Kamera 19 an die Bordelektronik übertragen werden. Wie in Figur 3 gezeigt, ist die Kamera 19 am Trägerteil 3 fest angebracht, wobei die mit der Kamera 19 verbundene Leiterplatte 10 mit einem von der Innenfläche 15 des Trägerteils 2 vorspringenden Kragen 12 durch ein Befestigungsmittel 13 fest verbunden ist. Das Befestigungsmittel 13 ist hier beispielsweise eine Schraube, die in ein passendes Gewinde des Kragens 12 eingeschraubt ist, was in Figur 3 nicht näher dargestellt ist. Durch den Kragen 12 wird eine Ausnehmung 16 geformt. Zudem ist das Trägerteil 3 mit einer Aussparung (Durchbrechung) 18 versehen. Die Ausnehmung 16 und die Aussparung 18 formen gemeinsam einen Raum für die Aufnahme der Kamera 19. Die Ränder der Aussparung 18 sind hier beispielsweise abgeschrägt. Aufgrund der Aussparung 18 des Trägerteils 3 ist ermöglicht, dass die Kamera 19 Bilder von der äußeren Umgebung der Außenseite I des Trägerteils 3 durch die transparente Abdeckung 2 hindurch machen kann.

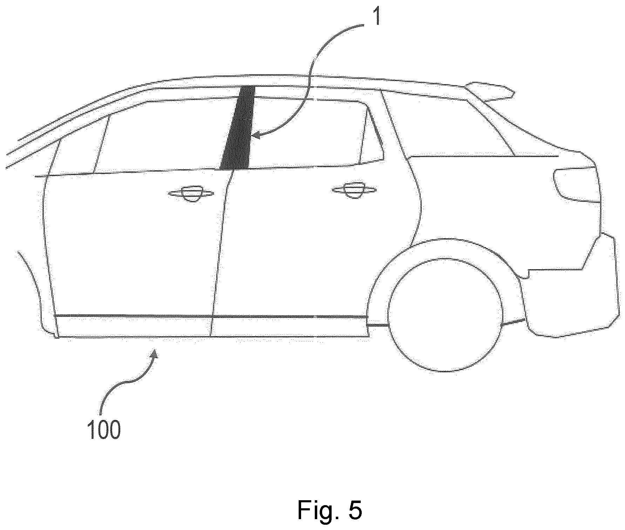

Figur 5 zeigt den Einbauzustand des in Form einer B-Säulenabdeckung ausgebildeten Anbauteils 1 von Figur 1 anhand einer Aufsicht auf ein teilweise dargestelltes Fahrzeug 100.

Die Abdeckung 2 und das daran angebundene Trägerteil 3 des in Figur 1 dargestellten Anbauteils 1 sind hier beispielsweise als 2-Komponenten Spritzgussteil gefertigt.

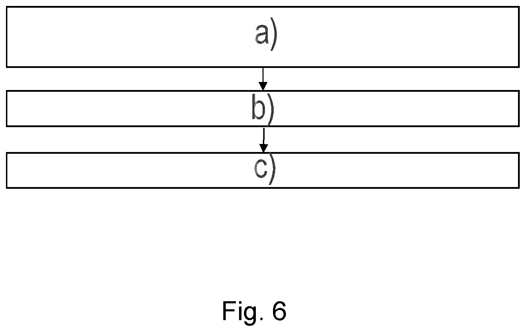

In Figur 6 ist ein Fließschema eines Verfahrens zur Herstellung des erfindungsgemäßen Anbauteils 1 von Figur 1 gezeigt.

Bei dem Verfahren wird in einem ersten Verfahrensschritt a) die Abdeckung 2 aus einem transparenten thermoplastischen Kunststoff spritzgegossen. In einem zweiten Verfahrensschritt b) wird das Trägerteil 3 aus einem thermoplastischen, bevorzugt schwarzen Kunststoff an die Abdeckung 2 angegossen. Das Trägerteil 3 wird so gegossen, dass es für die Anzeigevorrichtung 17 und die Kamera 19 eine Aussparung 18 aufweist.

Alternativ wird in einem ersten Verfahrensschritt a) das Trägerteil 3 aus einem thermoplastischen, bevorzugt schwarzen Kunststoff spritzgegossen. Das Trägerteil 3 wird so gegossen, dass es für die Anzeigevorrichtung 17 und die Kamera 19 eine Aussparung 18 aufweist. In einem zweiten Verfahrensschritt b) wird die Abdeckung 2 aus einem transparenten thermoplastischen Kunststoff an das Trägerteil 3 angegossen.

In einem dritten Verfahrensschritt c) werden die Funktionselemente 9, 17, 19 am Trägerteil 3 befestigt.

Optional kann das Verfahren das Beschichten, bevorzugt das Flutbeschichten, mit einem Schutzbezug (Hardcoat) als weiteren Verfahrensschritt umfassen, wobei die Beschichtung vor dem Befestigen der Funktionselemente 9, 17, 19 am Trägerteil 3 erfolgt.

Aus obigen Ausführungen ergibt sich, dass die Erfindung ein neuartiges Fahrzeuganbauteil zur Verfügung stellt, mit dem die Nachteile der im Stand der Technik bekannten Touch-Technik vermieden werden können. Gesten können berührungslos von einem kapazitiven Bewegungssensor erfasst werden. Über eine Anzeigevorrichtung kann der Anwender eine Rückmeldung über eine erfolgreiche Eingabe der Gesten erhalten. Zudem kann eine auf die jeweils erfasste Geste bezogene Darstellung erfolgen, insbesondere um Fahrzeugfunktionen zu steuern und Informationen anzuzeigen.

### Bezugszeichenliste

- 1: Anbauteil
- 2: Abdeckung
- 3: Trägerteil
- 4: Sensorzone
- 5: Anzeigezone
- 6: Kamerazone
- 7: Montageabschnitt
- 8: Logozone
- 9: Bewegungssensor
- 10: Leiterplatte
- 11: Anschlusskabel
- 12: Kragen
- 13: Befestigungsmittel
- 14: Außenfläche
- 15: Innenfläche
- 16: Ausnehmung
- 17: Anzeigevorrichtung
- 18: Aussparung
- 19: Kamera

- I: Außenseite
- II: Innenseite

## Patentansprüche

1. Fahrzeuganbauteil (1) mit integrierten Funktionselementen (9, 17, 19), welches umfasst:
- eine Abdeckung (2) mit einer Außenseite (I) und einer Innenseite (II), wobei die Abdeckung (2) zumindest einen transparenten Bereich aufweist,
- ein Trägerteil (3), das an der Innenseite (II) der Abdeckung (2) angeordnet und mit der Abdeckung (2) fest verbunden ist, wobei am Trägerteil (3) mindestens die folgenden Funktionselemente (9, 17, 19) befestigt sind:
i) mindestens ein kapazitiver Bewegungssensor (9) für eine ausschließlich berührungslose Erfassung von Gesten an der Außenseite (I) der Abdeckung (2),
ii) mindestens eine, gegenüberliegend zum transparenten Bereich angeordnete Anzeigevorrichtung (17) zur Darstellung von Informationen basierend auf mindestens einer erfassten Geste,
**dadurch gekennzeichnet dass**
das Fahrzeuganbauteil (1) als Funktionselement eine gegenüberliegend zum transparenten Bereich angeordnete, am Trägerteil (3) befestigte Kamera (19) für eine Personenerkennung und/oder zur Erfassung eines QR-Codes aufweist, welche zur Bildaufnahme durch den transparenten Bereich hindurch vorgesehen ist,
wobei die Abdeckung (2) aus einem thermoplastischen Kunststoff besteht, wobei der transparente Bereich der Abdeckung aus einem transparenten thermoplastischen Kunststoff besteht und/oder bei welchem das Trägerteil (3) aus einem thermoplastischen Kunststoff, insbesondere einem opaken thermoplastischen Kunststoff, besteht,
wobei die Abdeckung (2) und das Trägerteil (3) als 2-Komponenten-Spritzgussteil ausgebildet sind,
wobei das Trägerteil (3) an einer von der Abdeckung (2) abgewandten Innenfläche (15) mit mindestens einem Kragen (12) zur Befestigung des zumindest einen Funktionselements (9, 17, 19) versehen ist, wobei das Trägerteil (3) mit mindestens einem Befestigungselement (13) zur Befestigung des zumindest einen Funktionselements (9, 17, 19) versehen ist, wobei das mindestens eine Funktionselement (9, 17, 19) mittels einer Leiterplatte (10) durch das mindestens eine Befestigungselement (13) an dem zumindest einem Kragen (12) befestigt ist, und
wobei zumindest die mindestens eine Anzeigevorrichtung (17) und die Kamera (19) jeweils in mindestens einer in Form einer Durchbrechung ausgebildeten Aussparung (18) oder einer lokalen Ausdünnung des Trägerteils (3) zumindest teilweise aufgenommen sind.

2. Fahrzeuganbauteil (1) nach Anspruch 1, welches als Funktionselement mindestens einen am Trägerteil (3) befestigten, kapazitiven Bewegungssensor für eine berührende Erfassung von Tippeingaben an der Außenseite (I) der Abdeckung (2) aufweist.

3. Fahrzeuganbauteil (1) nach einem der Ansprüche 1 oder 2, bei welchem das zumindest eine Funktionselement (9, 17, 19) an einer von der Abdeckung (2) abgewandten Innenfläche (15) des Trägerteils (3) befestigt ist.

4. Fahrzeuganbauteil (1) nach einem der Ansprüche 1 bis 3, welches eine Frontscheibe, eine Heckscheibe, eine Seitenscheibe, eine Dachscheibe, eine Leiste, ein Stoßfänger, ein Schweller, ein Spoiler, eine Lampenabdeckung oder eine Blende, insbesondere eine B-Säulenblende, ist.

5. Verfahren zur Herstellung eines Fahrzeuganbauteils (1) mit integrierten Funktionselementen nach einem der Ansprüche 1 bis 4, bei welchem in einem ersten Schritt eine Abdeckung (2), die zumindest einen transparenten Bereich aufweist, mittels eines Spritzgussverfahrens hergestellt wird und in einem zweiten Schritt an die Abdeckung (2) an deren Innenseite (II) ein Trägerteil (3) aus thermoplastischen Kunststoff derartig angespritzt wird, dass die Innenseite (II) der Abdeckung (2) mit dem Trägerteil (3) verbunden wird;
oder
in einem ersten Schritt ein aus einem thermoplastischen Kunststoff bestehendes Trägerteil (3) mittels eines Spritzgussverfahrens hergestellt wird und in einem zweiten Schritt an das Trägerteil (3) eine Abdeckung (2), die zumindest einen transparenten Bereich aufweist, derartig angespritzt wird, dass die Innenseite (II) der Abdeckung (2) mit dem Trägerteil (3) verbunden wird;
in einem dritten Schritt die integrierten Funktionselemente am Trägerteil befestigt werden.

6. Verfahren nach Anspruch 5, bei welchem das Trägerteil (3) mit mindestens einer in Form einer Durchbrechung ausgebildeten Aussparung (18) oder lokalen Ausdünnung versehen wird, wobei mindestens ein Funktionselement (17, 19) in der Aussparung (18) oder der lokalen Ausdünnung, dem transparenten Bereich unmittelbar gegenüberliegend, angeordnet wird.

7. Verfahren nach Anspruch 5 oder 6, bei welchem die Abdeckung (2) und das daran angebundene Trägerteil (3) im 2-Komponenten-Spritzgussverfahren oder im 2-Komponenten-Spritzprägeverfahren mit Wendeplattentechnologie gefertigt werden.

8. Verwendung des Fahrzeuganbauteils (1) nach einem der Ansprüche 1 bis 7 zur Integration von Funktionselementen in Fahrzeugen, insbesondere Kraftfahrzeugen wie Personenkraftfahrzeugen, Lastkraftfahrzeugen, Bussen, insbesondere zur Integration in einer Scheibe, insbesondere einer Frontscheibe, einer Heckscheibe, einer Seitenscheibe oder einer Dachscheibe, in einer Leiste, insbesondere einer Seitenleiste, einer Frontleiste, einer Rückleiste oder einer Zierleiste, in einem Stoßfänger, in einem Schweller, in einem Spoiler, in einer Lampenabdeckung oder in einer Blende, insbesondere einer Säulenblende, insbesondere einer B-Säulenblende.

## Claims

1. A vehicle add-on part (1) with integrated functional elements (9, 17, 19), comprising:
- a cover (2) comprising an outer side (I) and an inner side (II), wherein the cover (2) has at least one transparent region,
- a support part (3) which is arranged on the inner side (II) of the cover (2) and is fixedly connected to the cover (2), wherein at least the following functional elements (9, 17, 19) are fastened to the support part (3):
i) at least one capacitive motion sensor (9) for exclusively contactless detection of gestures on the outer side (I) of the cover (2),
ii) at least one display device (17) arranged opposite the transparent region for the display of information based on at least one detected gesture,
**characterized in that**
the vehicle add-on part (1) has, as a functional element, a camera (19) arranged opposite the transparent region and fastened to the support part (3) for person recognition and/or for the detection of a QR code, which camera is provided for image capture through the transparent region,
wherein the cover (2) consists of a thermoplastic material, wherein the transparent region of the cover consists of a transparent thermoplastic material and/or wherein the support part (3) consists of a thermoplastic material, in particular an opaque thermoplastic material,
wherein the cover (2) and the support part (3) are formed as a 2-component injection-molded part,
wherein the support part (3) is provided, on an inner surface (15) facing away from the cover (2), with at least one collar (12) for the fastening of the at least one functional element (9, 17, 19), wherein the support part (3) is provided with at least one fastening element (13) for the fastening of the at least one functional element (9, 17, 19), wherein the at least one functional element (9, 17, 19) is fastened to the at least one collar (12) via a printed circuit board (10) using the at least one fastening element (13), and
wherein at least the at least one display device (17) and the camera (19) are respectively received at least partially in at least one recess (18) that is formed as an aperture or in a local thinning of the support part (3).

2. The vehicle add-on part (1) according to claim 1, which has as a functional element at least one capacitive motion sensor fastened to the support part (3) for contact-based detection of tap inputs on the outer side (I) of the cover (2).

3. The vehicle add-on part (1) according to either of claims 1 or 2, in which the at least one functional element (9, 17, 19) is fastened to an inner surface (15) of the support part (3) facing away from the cover (2).

4. The vehicle add-on part (1) according to any one of claims 1 to 3, which is a windshield, a rear window, a side window, a roof window, a trim strip, a bumper, a sill, a spoiler, a lamp cover, or a panel, in particular a B-pillar panel.

5. A method for manufacturing a vehicle add-on part (1) comprising integrated functional elements according to any one of claims 1 to 4, in which:
in a first step, a cover (2), which has at least one transparent region, is manufactured by means of an injection molding process, and
in a second step, a support part (3) made of thermoplastic material is molded onto the inner side (II) of the cover (2) such that the inner side (II) of the cover (2) is connected to the support part (3);
or
in a first step, a support part (3) consisting of a thermoplastic material is manufactured by means of an injection molding process, and
in a second step, a cover (2), which has at least one transparent region, is molded onto the support part (3) such that the inner side (II) of the cover (2) is connected to the support part (3);
in a third step, the integrated functional elements are fastened to the support part (3).

6. The method according to claim 5, in which the support part (3) is provided with at least one recess (18) that is formed as an aperture or a local thinning, wherein at least one functional element (17, 19) is arranged in the recess (18) or in the local thinning, directly opposite the transparent region.

7. The method according to claim 5 or 6, in which the cover (2) and the support part (3) connected thereto are manufactured by a 2-component injection molding process or by a 2-component injection-compression molding process with reversible plate technology.

8. A use of the vehicle add-on part (1) according to any one of claims 1 to 7 for the integration of functional elements into vehicles, in particular motor vehicles such as passenger cars, trucks, or buses, in particular for integration into a window, in particular a windshield, a rear window, a side window or a roof window, into a trim strip, in particular a side strip, a front strip, a rear strip or a decorative strip, into a bumper, into a sill, into a spoiler, into a lamp cover, or into a panel, in particular a pillar panel, in particular a B-pillar panel.

## Revendications

1. Pièce additionnelle pour véhicule (1) comportant des éléments fonctionnels (9, 17, 19) intégrés, laquelle comprend :
- un élément de recouvrement (2) comportant un côté extérieur (I) et un côté intérieur (II), dans laquelle l'élément de recouvrement (2) présente au moins une zone transparente,
- une pièce de support (3) qui est disposée sur le côté intérieur (II) de l'élément de recouvrement (2) et qui est reliée fixement à l'élément de recouvrement (2), dans laquelle au moins les éléments fonctionnels (9, 17, 19) suivants sont fixés à la pièce de support (3) :
i) au moins un capteur de mouvement (9) capacitif pour une détection exclusivement sans contact de gestes sur le côté extérieur (I) de l'élément de recouvrement (2),
ii) au moins un dispositif d'affichage (17) disposé en face de la zone transparente pour la représentation d'informations basées sur au moins un geste détecté,
**caractérisée en ce que**
la pièce additionnelle pour véhicule (1) présente, en tant qu'élément fonctionnel, une caméra (19) disposée en face de la zone transparente et fixée à la pièce de support (3) pour une reconnaissance de personnes et/ou pour la détection d'un code OR, laquelle est prévue pour la prise de vue à travers la zone transparente,
dans laquelle l'élément de recouvrement (2) est constitué d'une matière thermoplastique, dans laquelle la zone transparente de l'élément de recouvrement est constituée d'une matière thermoplastique transparente et/ou dans laquelle la pièce de support (3) est constituée d'une matière thermoplastique, en particulier d'une matière thermoplastique opaque,
dans laquelle l'élément de recouvrement (2) et la pièce de support (3) sont réalisés sous forme de pièce moulée par injection à deux composants,
dans laquelle la pièce de support (3) est pourvue, sur une surface intérieure (15) opposée à l'élément de recouvrement (2), d'au moins une collerette (12) pour la fixation de l'au moins un élément fonctionnel (9, 17, 19), dans laquelle la pièce de support (3) est pourvue d'au moins un élément de fixation (13) pour la fixation de l'au moins un élément fonctionnel (9, 17, 19), dans laquelle l'au moins un élément fonctionnel (9, 17, 19) est fixé à l'au moins une collerette (12) par l'au moins un élément de fixation (13) au moyen d'une carte de circuits imprimés (10), et
dans laquelle au moins l'au moins un dispositif d'affichage (17) et la caméra (19) sont respectivement reçus au moins partiellement dans au moins un évidement (18) réalisé sous la forme d'une percée ou dans un amincissement local de la pièce de support (3).

2. Pièce additionnelle pour véhicule (1) selon la revendication 1, laquelle présente comme élément fonctionnel au moins un capteur de mouvement capacitif fixé à la pièce de support (3) pour une détection par contact d'entrées de tapotement sur le côté extérieur (I) de l'élément de recouvrement (2).

3. Pièce additionnelle pour véhicule (1) selon l'une des revendications 1 ou 2, dans laquelle l'au moins un élément fonctionnel (9, 17, 19) est fixé à une surface intérieure (15), opposée à l'élément de recouvrement (2), de la pièce de support (3).

4. Pièce additionnelle pour véhicule (1) selon l'une des revendications 1 à 3, laquelle est un pare-brise, une lunette arrière, une vitre latérale, une vitre de toit, une baguette, un pare-chocs, un seuil de porte, un becquet, un cache de lampe ou un panneau, en particulier un panneau de pied milieu.

5. Procédé de fabrication d'une pièce additionnelle pour véhicule (1) comportant des éléments fonctionnels intégrés selon l'une des revendications 1 à 4, dans lequel, dans une première étape, un élément de recouvrement (2), lequel présente au moins une zone transparente, est fabriqué au moyen d'un procédé de moulage par injection et, dans une deuxième étape, une pièce de support (3) en matière thermoplastique est injectée sur l'élément de recouvrement (2) sur son côté intérieur (II) de telle sorte que le côté intérieur (II) de l'élément de recouvrement (2) est relié à la pièce de support (3) ;
ou
dans une première étape, une pièce de support (3) constituée d'une matière thermoplastique est fabriquée au moyen d'un procédé de moulage par injection et, dans une deuxième étape, un élément de recouvrement (2), lequel présente au moins une zone transparente, est injecté sur la pièce de support (3) de telle sorte que le côté intérieur (II) de l'élément de recouvrement (2) est relié à la pièce de support (3) ;
dans une troisième étape, les éléments fonctionnels intégrés sont fixés à la pièce de support.

6. Procédé selon la revendication 5,
dans lequel la pièce de support (3) est pourvue d'au moins un évidement (18) réalisé sous la forme d'une percée ou d'un amincissement local, dans lequel au moins un élément fonctionnel (17, 19) est disposé dans l'évidement (18) ou dans l'amincissement local, directement en face de la zone transparente.

7. Procédé selon la revendication 5 ou 6,
dans lequel l'élément de recouvrement (2) et la pièce de support (3) qui y est reliée sont fabriqués par un procédé de moulage par injection à deux composants ou par un procédé de moulage par injection-compression à deux composants avec une technologie à plaquettes réversibles.

8. Utilisation de la pièce additionnelle pour véhicule (1) selon l'une des revendications 1 à 7 pour l'intégration d'éléments fonctionnels dans des véhicules, en particulier des véhicules automobiles tels que des véhicules de tourisme, des camions, des bus, en particulier pour l'intégration dans une vitre, en particulier un pare-brise, une lunette arrière, une vitre latérale ou une vitre de toit, dans une baguette, en particulier une baguette latérale, une baguette avant, une baguette arrière ou une baguette décorative, dans un pare-chocs, dans un seuil de porte, dans un becquet, dans un cache de lampe ou dans un panneau, en particulier un panneau de montant, en particulier un panneau de pied milieu.
